# EUROPEAN PATENT APPLICATION

(11) **EP 2 702 876 A1**
(43) Date of publication of application: **05.03.2014**
(21) Application number: 12006178.3
(22) Date of filing: 31.08.2012
(51) Int. Cl.: A23K 1/16, A23K 1/18

(54) **Aqua feed pellet and method of its preparation**

(71) Applicant: Tiense Suikerraffinaderij N.V., 1150 Brussel (BE)
(72) Inventor: The designation of the inventor has not yet been filed
(74) Representative: Koster, Nico

(57) **Abstract**

The invention relates to a method of treating an aqua feed pellet with a lipid-containing composition, whereby the aqua feed pellet contains a protein fraction, a binder, and optionally a lipid fraction, wherein the binder contains rice flour and/or rice starch. The invention further relates to an aqua feed pellet whereby the sum of the lipid fraction and the protein fraction is at least 70 wt.%, whereby the binder contains rice flour and/or rice starch.

## Description

The invention relates to a method of treating an aqua feed pellet with a lipid-containing composition. The invention further relates to an aqua feed pellet, and to a method of feeding fish.

WO-A-2006/098629 discloses that the most common process for making fish feed like salmon feed, comprises extrusion of the protein raw materials to which water, vitamins, pigments and minerals are added. Some lipids may also be added before extrusion. The extruded porous pellets are then exposed to vacuum and lipids are absorbed into the pores. WO-A-2006/098629 furthermore discloses that wheat may be used as a binder in the extrusion process.

A disadvantage of the known method is that it is difficult to optimise the amount of the protein fraction and the lipid fraction in the aqua feed pellet, due to the relatively high amount of wheat that is used. As is known, some fish such as salmon are hardly at all capable of digesting carbohydrates.

It is the objective of the present invention to reduce the disadvantage of the known method.

The said objective is reached by a method of treating an aqua feed pellet with a lipid-containing composition, whereby the aqua feed pellet contains a protein fraction, a binder, and optionally a lipid fraction, wherein the binder contains rice flour and/or rice starch.

It is an advantage of the present invention that an increased flexibility is obtained in the formulation of aqua feed pellets. It is, for example, according to the invention possible to utilize a low amount of binder while still obtaining aqua feed pellets of acceptable quality; this embodiment allows the presence of a high amount of the lipid and/or protein fraction in the aqua feed pellet.

The present invention relates to a method of treating aqua feed pellets. Aqua feed pellets as such are well known; these pellets are meant as feed in aquaculture, for feeding aquatic animals such as for example salmon or shrimp which are usually raised for later consumption. Various types of aqua feed pellets exist; the pellet types are often formulated with specific aquatic animals in mind, thus taking into account their specific needs and thereby influencing the desired ratios between a lipid fraction, a protein fraction, and - if desired - a nutritional carbohydrate fraction. Thus, the ratios between the said fractions can vary between wide limits. Typically, aqua feed pellets are also formulated to contain vitamins, minerals, and any further compounds as desired.

The production of aqua feed pellets can be done in a variety of processes, such as for example an extrusion process or a pellet press process. Such processes are herein collectively referred to as pelletizing processes and are known per se, and it is in this stage that a binder should be present to exercise its function. A typical characteristic of the known processes is that the amount of lipids that can be included is rather restricted; above a certain threshold value the production process does not run efficiently or does not run at all anymore. Yet it is often desirable to have an amount of lipids in the aqua feed pellets above the said threshold value. For this purpose, a practice has evolved in recent years to treat the aqua feed pellets, subsequent to their initial formation, with a lipid-containing composition. It has proven beneficial in some circumstances to execute this treatment partially in vacuum so as to stimulate the taking up of lipids by the aqua feed pellet.

Aqua feed pellets will typically, and also resulting from the method of the present invention, contain at least a lipid fraction, a protein fraction, and a binder.

A lipid fraction is a fraction that contributes lipids such as fats to the pellet. Such fractions are as such known, and can be of any suitable origin, such as of vegetable and/or animal origin. The lipid fraction can be, when evaluated at room temperature, available as a liquid or as a solid. One example of a lipid fraction is oil, such as fish oil. The lipid fraction can be a mixture of various lipid fractions. Preferably, the lipid fraction is in the form of a liquid. The lipid fraction should contain lipids but may, as is known in the industry of making aqua feed pellets, contain other substances as well, depending on the source of the lipid fraction and the type of aqua feed pellet it is included in. As is known, the choice of lipid fraction is often determined by balancing the desire to have a fraction having an as high as possible lipid content with the price of the fraction; also, considerations relating to the pellet production process and the physical or functional characteristics of the aqua feed pellet can play a role. Preferably, the lipid fraction contains at least 50 wt.% lipids, more preferably at least 60, 70, 80, or even at least 90 or 95 wt.% lipids; the lipid fraction can even preferably consist essentially of lipids.

The amount of the lipid fraction in the aqua feed pellet may vary within wide limits, depending on considerations known in the art and relating a.o. to the specific purpose of the aqua feed pellet, the capabilities of the production process, and economical factors. For certain types of aqua feed pellets, such as for example pellets which are aimed at the raising of salmon, it is desirable that the lipid fraction is rather big and should ideally reach 8, 10, 15, 20, 25, 30, or even 35 or 40 wt.% or more of the aqua feed pellet, calculated on the pellet as a whole and after any treatment subsequent to the pelletizing process having been done such as the treatment with the lipid-containing composition of the present invention. It is preferred that the amount of the lipid fraction is at most 60, 55, 50, or 45 wt.% of the pellet as a whole, in order to leave sufficient room for other fractions such as in particular the protein fraction and the binder.

A protein fraction is a fraction that contributes proteins, and possibly or alternatively peptides and/or amino acids, to the pellet. Such fractions are as such known, and can be of any suitable origin, such as vegetable and/or animal origin. One example of a protein fraction is fish meal; another example of a protein fraction is wheat gluten. The protein fraction can also be a mixture of various protein fractions. The protein fraction should contain proteins and/or peptides and/or amino acids, but may, as is known in the industry of making aqua feed pellets, contain other substances as well, depending on the source of the protein fraction and the type of aqua feed pellet it is included in. As is known, the choice of protein fraction is often determined by balancing the desire to have a fraction having an as high as possible amount of proteins and/or peptides and/or amino acids with the price of the fraction; also, considerations relating to the pellet production process and the physical or functional characteristics of the aqua feed pellet can play a role. Preferably, the protein fraction contains at least 30, 40, 50, 60, 70, or even at least 80 wt.% proteins and/or peptides and/or amino acids. In one preferred embodiment, the protein fraction consists essentially of proteins and/or peptides and/or amino acids.

The amount of the protein fraction in the aqua feed pellet may vary within wide limits, depending on considerations known in the art and relating a.o. to the specific purpose of the aqua feed pellet, the capabilities of the production process, and economical factors. For most types of aqua feed pellets it is desirable that the protein fraction is rather big and should ideally reach at least 15, 20, 25, 30, 35, 40, 45, or even at least 50, 55, 60, 65, or 70 wt.% or more of the aqua feed pellet, calculated on the pellet as a whole and after any treatment subsequent to the pelletizing process having been done. It is preferred that the amount of the protein fraction is at most 85, 80, or 75 wt.% of the pellet as a whole, in order to leave sufficient room for other fractions such as in particular the lipid fraction and the binder.

A binder is included into an aqua feed pellet in order to bind the constituents of the aqua feed pellet together. The binding function is usually initiated in the pelletizing process, but can also thereafter play a role, for example in co-determining the capabilities of the pellet to absorb a lipid-containing composition subsequent to the pelletizing process, and co-determining the functional characteristics of the aqua feed pellet in use, e.g. mechanical stability during transport and floating / sinking behaviour when made available in an aquatic environment. Although a binder may contribute to the nutritional value of the aqua feed pellets, such contribution is not its main purpose. Binders are as such known; one example of a known type of binder is a carbohydrate-based binder, preferably a starch-based binder. As meant herein, a starch-based binder is a binder that relies primarily on a flour or a starch for its binding functionality; widely used examples of starch-based binders are binders consisting of wheat flour or wheat starch.

The amount of binder in the aqua feed pellets may vary within wide limits, whereby often a balance is struck between on the one hand including a sufficient amount of binder so that the desired functionality is achieved, and on the other hand limiting the amount of binder as much as possible in order to maximise the amount of fractions that contribute to the nutritional value of the aqua feed pellet such as the lipid fraction and the protein fraction. In the known practice, the amount of binder in the aqua feed pellet may be up to 15 or 20 wt.% or more, calculated on the pellet as a whole and after any treatment subsequent to the pelletizing process having been done.

According to the method of the invention, an aqua feed pellet is treated with a lipid-containing composition. Such a treatment is as such known, and can take the form of for example applying a coating to the pellet with a liquid lipid-containing composition. If the pellet to be treated already contains a lipid fraction, then the lipid-containing composition may be of the same type as the lipid fraction already contained in the pellet to be treated, or it may be another type of lipid fraction, whereby it is preferred for practical reasons that the lipid-containing composition is in liquid form during the treatment. In a preferred embodiment, the lipid-containing composition consists essentially of lipids. In one embodiment, the step of treating the aqua feed pellet is done in a vacuum coater; such vacuum coaters are as such known, as well as the conditions in which the treatment is executed.

The treatment of the aqua feed pellet with the lipid-containing composition should lead to the introduction or to an increase of the overall lipid content of the aqua feed pellet. The introduction or increase is the result of a coating action and/or the taking up or absorption of the lipid-containing composition by the aqua feed pellet.

According to the present invention, the binder should contain rice flour and/or rice starch.

It was found that the inclusion of rice flour and/or rice starch into the binder can increase the effectiveness of the functionality of the binder, thereby allowing to reduce the amount of binder compared to known binders such as binders consisting of wheat flour.

It was furthermore found that the inclusion of rice flour and/or rice starch into the binder can influence the expansion of the aqua feed pellet so produced. As is known, certain production techniques such as in particular extrusion can lead to an expansion of the pellet as soon as it leaves the installation, such as an extruder, in which the pellet was produced. This expansion is thought to be caused primarily by the binder, in particular in case the binder is starch-based. The typical result of the expansion is that the aqua feed pellet becomes somewhat porous and of lower density. The porous nature of the pellet is advantageously used in the subsequent treatment of the pellet with the lipid-containing composition, allowing the pellet to take up more of the lipid-containing composition compared to a pellet that has not shown any expansion. At the same time, however, the reduced density of the aqua feed pellet can lead to a situation in which the aqua feed pellets will not sink easily or not at all when put into water; this can be a disadvantage, since in aquaculture industry it is - depending on the species fed and/or the culture condition - considered a disadvantage when aqua feed pellets float, as it reduces the availability of the aqua feed pellets to the animals to be fed.

It was surprisingly found that the inclusion of rice flour and/or rice starch can lead to a reduction of the expansion of the aqua feed pellet, while at the same time the aqua feed pellet can retain a very good capacity to take up a lipid-containing composition.

Rice flour and/or rice starch are as such known. A wide range of rice flours and rice starches are suitable for use in the method of the present invention. In one embodiment of the invention, one suitable class of rice flours and/or rice starches are the so-called waxy rice flours and/or waxy rice starches. As is known, the term waxy indicates that the starch consists essentially of starch of the amylopectin type. In another embodiment of the invention, it was found that when a rice flour and/or a rice starch is used that has at least some amylose in its starch, the rest of the starch being essentially amylopectin, that then the expansion of the aqua feed pellet can be reduced even further. In this embodiment, it is preferred that the starch in the rice flour and/or rice starch contains at least 1 wt.% of amylose, more preferably at least 2, 3, 4, 5, 6, 7, 8, 9, or even at least 10 wt.% amylose. It is preferred that the starch contains at most 30, 28, 26, 25, 24, or even at most 23, 22, 21, or 20 wt.% of amylose.

In one main embodiment of the invention, the binder is a starch-based binder that consists essentially of rice flour and/or rice starch. In this embodiment, the binder may consist of one type of rice flour or rice starch, or it may consist of a mixture of two or more types of rice flour and/or rice starch. It was found that when a rice starch is used, that the binding functionality can be somewhat stronger as compared to a rice flour, thereby allowing an even further reduced usage in the aqua feed pellet. If a mixture is used, it is preferred that the second rice flour or rice starch that is used has an amylose content that differs at least 1 wt.% from the amylose content of the first rice flour or rice starch; preferably, the difference in amylose content lies between 1 and 30 or 25 wt.% and is at least 2, 3, 4, 5, 6, 7, 8, 9, or even at least 10 wt.%. Preferably, the weight ratio between the rice flours or starches in this mixture can vary between 1:99 and 99:1 of two types are mixed, mutatis mutandis in case three or more types are used. This has the advantage that the effects on aqua feed pellet behaviour of the amylose and amylopectin starches can be used more efficiently to adjust the properties of the aqua feed pellet to the specific needs at hand.

In an alternative main embodiment of the invention, the binder is a starch-based binder that contains rice flour and/or rice starch as a first starch or flour, and furthermore contains a second starch or flour. Preferably, the second starch or flour is from a source selected from the group consisting of wheat, corn, potato, and tapioca. This has the advantage that essential aspects of the aqua feed pellet such as expansion, density, uptake of the lipid-containing composition, and floating/sinking behaviour, can be adjusted within very wide ranges. The weight ratio between the rice flour and/or rice starch and the second starch or flour may thus vary between very wide limits such as between 1:99 and 99:1, or between 10:90 and 90:10, between 20:80 and 80:20, between 30:70 and 70:30, or even between 40:60 and 60:40. In one preferred embodiment, the second starch or flour is from wheat.

If it is desired to minimize the amount of binder in the aqua feed pellet, for example because of the desire to maximise the amounts of the lipid fraction and/or the protein fraction in the aqua feed pellet, then it is preferred that the binder contains a high amount of rice flour and/or rice starch or even consists essentially of rice flour and/or rice starch.

In one preferred embodiment, the amount of binder in the pellet, as measured subsequent to completion of any steps of treating the pellet with a lipid-containing composition, is at most 15 or even at most 10 wt.%. In this embodiment, it is preferred that the binder contains at least 30 wt.% rice flour and/or rice starch, preferably at least 40 or 50 wt.%. In another embodiment of the invention the amount of binder in the pellet, as measured subsequent to completion of any steps of treating the pellet with a lipid-containing composition, is at most 9, 8, 7, 6, or even at most 5 wt.%; in this embodiment, it is preferred that the binder contains at least 50, 55, 60, 65, 70, or even at least 75 or 80 wt.% rice flour and/or rice starch, or even consists essentially of rice flour and/or rice starch, preferably consists essentially of rice starch.

The presence according to the invention of a binder containing rice flour and/or rice starch in the aqua feed pellet can ensure that in the treatment of the aqua feed pellet with the lipid-containing composition, there will be a desired increase of the overall lipid content of the aqua feed pellet. The increase is the result of a coating action and/or the taking up or absorption of the lipid-containing composition by the aqua feed pellet. After having been included on or in the aqua feed pellet, the lipid-containing composition becomes a part of the lipid fraction of the aqua feed pellet.

It was found that the rice flour and/or rice starch can lead to a favourable combination of porosity and further characteristics of the aqua feed pellet, thus increasing the suitability of the aqua feed pellet towards an increase of the overall lipid content as a result of the treatment. This overall increase is preferably such that the amount of lipid-containing composition that is taken up by the aqua feed pellet - as coating or via absorption - is between 1 or 5 and 50 wt.% of the weight of the pellet prior to applying the lipid-containing composition. Preferably, the increase is between 8 or 10 and 40 wt.%.

The method of the invention can lead to an aqua feed pellet in which the relative amounts of the most valuable ingredients from an aquaculture point of view - thus typically the protein fraction and the lipid fraction, whereby the lipid fraction is the sum of the optional lipid fraction originally included in the pellet and the lipid-containing composition as taken up in the treatment of the pellet - can be advantageously maximised.

The invention furthermore relates to an aqua feed pellet, containing at least a lipid fraction, a protein fraction, and a binder, whereby the sum of the lipid fraction and the protein fraction is at least 70 wt.%, whereby the binder contains rice flour and/or rice starch. Preferably, the sum of the lipid fraction and the protein fraction is at least 75 wt.%, more preferably at least 76, 77, 78, 79, 80, 81, 82, 83, 84, or even at least 85 wt.%. As the relative amount of the lipid fraction can be high in relation to the amount of binder, it is preferred that the weight ratio of binder to lipid fraction lies between 1:1 and 1:10, more preferably between 1:3 and 1:10 or 1:9. Similarly, it is preferred that the weight ratio of binder to protein fraction lies between 1:1 and 1:20, more preferably between 1:5 or even 1:10 and 1:20 or 1:19.

The aqua feed pellet according to the invention can be obtained via the method as disclosed hereinabove; however, the aqua feed pellet according to the invention may also be obtained via any other suitable method.

In one embodiment, it is preferred to choose a rice flour and/or rice starch having characteristics on the amount of amylopectin and amylose as described above. In another embodiment it is preferred to combine the rice flour and/or rice starch - having possibly a specific ratio of amylose to amylopectin as described herein - with a second flour or starch, as described above. The second flour or starch can be from a source selected from the group consisting of wheat, corn, potato, tapioca, and rice having a significantly different ratio of amylose to amylopectin from the first rice flour and/or rice starch. It is preferred that the protein fraction contains wheat gluten.

The aqua feed pellet according to the invention is suitable for feeding aquatic animals in a wide variety of aquaculture implementations. In one such use, the aqua feed pellet is used in a method of feeding a member of the genus Salmo or Oncorhynchus; a.o. the fish commonly referred to a salmon is a member of the said genus. In another use, the aqua feed pellet of the invention is used in a method of feeding a member of the order decapod crustacean; a.o. shrimp and prawn are members of the said order.

The invention will be illustrated by the following Examples and Comparative experiments, without being limited thereto.

### Examples 1 - 9; Comparative experiment A

Aqua feed pellets were made by means of extrusion. The extruder was a twin-screw extruder; the die had a 4 mm hole diameter. The temperature of the pellets at the exit was 110°C. The composition of the pellets of Examples 1 - 9 and of Comparative experiment A is given in Table 1.

**Table 1 - Composition of aqua feed pellets, as extruded but prior to the subsequent treatment with the lipid-containing composition**

| | A | 1 | 2 | 3 | 4 | 5 | 6 | 7 | 8 | 9 |
|---|---|---|---|---|---|---|---|---|---|---|
| *Ingredient* | | | | | | | | | | |
| Fish meal¹ | 56.4 | 50.3 | 50.3 | 53.8 | 53.8 | 49.5 | 49.5 | 48.3 | 48.3 | 47.1 |
| C-gluten² | 8.8 | 8.8 | 8.8 | 8.8 | 8.8 | 8.8 | 8.8 | 8.8 | 8.8 | 8.8 |
| W- gluten³ | 12.5 | 12.5 | 12.5 | 12.5 | 12.5 | 12.5 | 12.5 | 12.5 | 12.5 | 12.5 |
| SPC⁴ | | 8.1 | 8.1 | 3.4 | 3.4 | 7.9 | 7.9 | 12.6 | 12.6 | 14.8 |
| Soya Hipro⁵ | 5.9 | 7.3 | 7.3 | 6.9 | 6.9 | 7.3 | 7.3 | 7.4 | 7.4 | 9.1 |
| Fish oil⁶ | 1.6 | 2.5 | 2.5 | 2.0 | 2.0 | 2.0 | 2.5 | 2.8 | 2.8 | 2.9 |
| Wheat flour⁷ | 14.6 | | | 7.3 | 7.3 | | | | | |
| B7 ⁸ | | 10.4 | | 5.3 | | | | 7.5 | | 4.6 |
| DR⁹ | | | 10.4 | | 5.3 | | | | 7.5 | |
| R7-200 ¹⁰ | | | | | | 11.4 | | | | |
| S 200 ¹¹ | | | | | | | 11.4 | | | |
| Premix¹² | 0.25 | 0.25 | 0.25 | 0.25 | 0.25 | 0.25 | 0.25 | 0.25 | 0.25 | 0.25 |

| *Composition* | | | | | | | | | | |
|---|---|---|---|---|---|---|---|---|---|---|
| Protein | 60 | 60 | 60 | 60 | 60 | 60 | 60 | 61.5 | 61.5 | 62.9 |
| Lipid | 10 | 10 | 10 | 10 | 10 | 10 | 10 | 10 | 10 | 10 |
| Ash | 8.3 | 8.0 | 8.0 | 8.0 | 8.0 | 8.0 | 8.0 | 8.3 | 8.3 | 8.1 |
| Fibre | 0.5 | 0.8 | 0.8 | 0.8 | 0.8 | 0.8 | 0.8 | 0.9 | 0.9 | 1.1 |
| Moisture | 10 | 10 | 10 | 10 | 10 | 10 | 10 | 10.6 | 10.6 | 11.6 |
| Starch | 11.3 | 11.3 | 11.3 | 11.3 | 11.3 | 11.3 | 11.3 | 8.7 | 8.7 | 6.2 |

| | | | | | | | | | | |
|---|---|---|---|---|---|---|---|---|---|---|
| Legend to Table 1 • All composition details are in wt.% • ¹: Type 999 LT. Supplier: TripleNine, Denmark • ²: C-gluten means corn gluten • ³: W-gluten means wheat gluten • ⁴: SPC means soy protein concentrate • ⁵: 48% proteins; supplier: Cargill • ⁶: Supplier: Coppens International; type: Peruvian • ⁷: Supplier: Meneba • ⁸: Remy B7 is a high-amylose rice starch; supplier: Beneo Remy • ⁹: Remyline DR is a waxy rice starch; supplier: Beneo Remy • ¹⁰: Remyflo R7-200 is a high-amylose rice flour; supplier: Beneo Remy • ¹¹: Remyflo S 200 is a waxy rice flour; supplier: Beneo Remy • ¹²: Premix is a mixture of vitamins and minerals; supplier: Coppens International | | | | | | | | | | |

Some characteristics of the pellets as extruded are given in Table 2. The data in Table 2 clearly shows that the expansion of the pellets according to the invention is less than the expansion of the pellets in the Comparative Experiment A, also in those Examples where the amount of starch is the same as in Comparative Experiment A. Furthermore, Table 2 clearly shows that the use of a binder containing waxy rice flour or waxy rice starch typically leads to a higher expansion compared to the use of a binder which contains high-amylose rice flour or high amylose rice starch. See Example 1 vs. Example 2; Example 3 vs. Example 4; and example 5 vs. Example 6.

**Table 2**

| | A | 1 | 2 | 3 | 4 | 5 | 6 | 7 | 8 | 9 |
|---|---|---|---|---|---|---|---|---|---|---|
| Expansion | 32 | 15 | 21 | 24 | 30 | 12 | 15 | 11 | 11 | 5 |
| Density | 505 | 544 | 528 | 532 | 519 | 530 | 553 | 560 | 558 | 550 |

| | | | | | | | | | | |
|---|---|---|---|---|---|---|---|---|---|---|
| Legend to Table 2 • The expansion is expressed as the percentage increase in pellet diameter as compared to the diameter of the die hole • The density is given in kg/m³ | | | | | | | | | | |

The pellets were subsequently treated with a liquid lipid-containing composition; this treatment was done by immersing the pellets into fish oil at room temperature and atmospheric pressure. The fish oil was the same as the fish oil that was used in the extrusion formulations. Some characteristics of the pellets subsequent to the treatment are provided in Table 3.

**Table 3**

| | A | 1 | 2 | 3 | 4 | 5 | 6 | 7 | 8 | 9 |
|---|---|---|---|---|---|---|---|---|---|---|
| Total oil | 19.1 | 22.6 | 15.5 | 18.1 | 16.4 | 20.1 | 16.2 | 23.3 | 19.9 | 25.0 |
| Sinking time | n.d. | 10 | 52 | 48 | 26 | 13 | 44 | 8 | 8 | 9 |
| % Floating | 100 | 0 | 79 | 26 | 97 | 0 | 32 | 0 | 0 | 0 |
| Durability | 99.1 | 99.3 | 99.3 | 99.5 | 99.1 | 98.5 | 99.1 | 99.3 | 98.5 | 98.0 |

| | | | | | | | | | | |
|---|---|---|---|---|---|---|---|---|---|---|
| Legend to Table 3 • Total oil: the sum of the fish oil that was included in the extrusion formulation and the fish oil that was taken up in the subsequent immersion treatment, in wt.% of the end product (i.e. after the treatment) • Sinking time: the average time (in seconds) that it takes for a pellet to sink from the top to the bottom of a 450 mm water column. Floating pellets are not taken into account. • % Floating: percentage of pellets that stay afloat in water for at least 1 minute • Durability: percentage of intact pellets after exposure to simulated transport stress during 2 minutes in a Holmen^{®} tester | | | | | | | | | | |

As is clear from the results in Table 3, the present invention allows the making of aqua feed pellets having various favourable combinations of features - for example, focusing on maximum oil content, or focusing on floating/sinking behaviour, or a combination thereof.

## Claims

1. Method of treating an aqua feed pellet with a lipid-containing composition, whereby the aqua feed pellet contains a protein fraction, a binder, and optionally a lipid fraction, **characterised in that** the binder contains rice flour and/or rice starch.

2. Method according to claim 1, whereby the starch in the rice flour and/or rice starch contains at least 1 wt.% amylose.

3. Method according to claim 2, whereby the starch in the rice flour and/or rice starch contains at least 10 wt.% amylose.

4. Method according to any one of claims 1 - 3, whereby the binder consists essentially of rice flour and/or rice starch.

5. Method according to any one of claims 1 - 3, wherein the binder contains a second starch or flour.

6. Method according to claim 5, wherein the second starch or flour is from a source selected from the group consisting of:
• wheat,
• corn,
• potato,
• rice having an amylose content in the starch of the rice which is at least 1 wt.% higher or lower than that of the first rice flour and/or rice starch, and
• tapioca,
whereby the weight ratio between the rice flour and/or rice starch and the second starch or flour varies between 1:99 and 99:1.

7. Method according to any one of claims 1 - 6, whereby the amount of binder in the pellet, as measured subsequent to completion of the step of applying the lipid-containing composition to the pellet, is at most 10 wt.%.

8. Method according to any one of claims 1 - 7, whereby the lipid-containing composition consists essentially of lipids.

9. Method according to any one of claims 1 - 8, whereby the amount of lipid-containing composition that is taken up by the aqua feed pellet is between 5 and 50 wt.% of the weight of the pellet prior to applying the lipid-containing composition.

10. Aqua feed pellet, containing at least a lipid fraction, a protein fraction, and a binder, whereby the sum of the lipid fraction and the protein fraction is at least 70 wt.%, whereby the binder contains rice flour and/or rice starch.

11. Aqua feed pellet according to claim 10, whereby the starch in the rice flour and/or rice starch contains at least 1% amylose.

12. Aqua feed pellet according to claim 11, wherein the starch in the rice flour and/or rice starch contains at least 10% amylose.

13. Aqua feed pellet according to any one of claims 10 - 12, wherein the binder consists essentially of rice flour and/or rice starch.

14. Aqua feed pellet according to any one of claims 10 - 12, wherein the binder contains a second starch or flour from a source selected from the group consisting of:
• wheat,
• corn,
• potato,
• rice having an amylose content in the starch of the rice which is at least 1 wt.% higher or lower than that of the first rice flour and/or rice starch, and
• tapioca,
whereby the weight ratio between the rice flour and/or rice starch and the second starch varies between 1:99 and 99:1.

15. Aqua feed pellet according to any one of claims 10 - 14 , wherein the sum of the lipid fraction and the protein fraction is at least 75 wt.%.

16. Aqua feed pellet according to any one of claims 10 - 15, wherein the weight ratio of binder to lipid fraction lies between 1:1 and 1:10.

17. Aqua feed pellet according to any one of claims 10 - 16, wherein the protein fraction contains wheat gluten.

18. Method of feeding an aquatic animal, comprising the step of providing an aqua feed pellet according to any one of claims 10 - 17 to the aquatic animal.

19. Method according to claim 18, wherein the aquatic animal is a member of the genus Salmo or Oncorhynchus (salmon) or of the order decapod crustacean (shrimp, prawn).
